# EUROPEAN PATENT SPECIFICATION

(11) **EP 0 642 467 B1**
(45) Date of publication and mention of the grant of the patent: **13.12.1995**
(21) Application number: 93913626.3
(22) Date of filing: 14.05.1993
(51) Int. Cl.: C01F 11/46

(54) **DIRECT FORMATION OF ALPHA-CALCIUM-SULFATE-HEMIHYDRATE UNDER ATMOSPHERIC PRESSSURE**
VERFAHREN ZUR DIREKTEN HERSTELLUNG VON ALPHA-CALCIUMSULFATHALBHYDRAT BEI ATMOSPHÄREN DRUCK
FORMATION DIRECTE DE SEMI-HYDRATE DE ALPHA-SULFATE DE CALCIUM A LA PRESSION ATMOSPHERIQUE

(30) Priority: 27.05.1992 EP 92201538
(43) Date of publication of application: 15.03.1995
(73) Proprietor: PURAC BIOCHEM B.V., 4200 AA Gorinchem (NL)
(72) Inventor: NIJHOF, Evert, NL-2624 ZX Delft (NL); WITKAMP, Geert, Jan, NL-2651 XB Berkel en Rodenrijs (NL); MULDER, Klaas, Hendrik, NL-4201 ZE Gorinchem (NL)
(74) Representative: de Bruijn, Leendert C.
(86) International application number: NL9300101
(87) International publication number: WO9324410

(56) References cited:
- EP-A- 0 432 610
- FR-A- 2 269 501
- FR-A- 2 343 696

## Description

The invention relates to a process for the direct formation of α-calcium sulfate hemihydrate by converting a calcium salt with a sulfate compound in an aqueous system at temperatures exceeding the α-calcium sulfate hemihydrate/calcium sulfate dihydrate transition temperature.

The ability of calcium sulfate hemihydrate to readily convert to the dihydrate form and harden when mixed with water is the basis for its many uses (e.g. in wallboard or in cement to control set). Two forms of calcium sulfate hemihydrate, i.e. the α- and β-forms, are identified. α-Calcium sulfate hemihydrate is distinguishable from β-calcium sulfate hemihydrate in that its particles disintegrate very little when mixed with water. Hence it requires less mixing water to form a workable slurry and consequently, it has the ability to produce denser and higher compressive-strength casts. Furthermore, less excess water has to be removed after dehydration is complete.

β-Calcium sulfate hemihydrate is obtained when natural or synthetic gypsum is dehydrated in a vacuum at 100°C, or under conditions where a nearly saturated steam atmosphere does not prevail.

α-Calcium sulfate hemihydrate may be prepared by dehydration of gypsum in water at temperatures above 97°C under elevated pressure or by conversion in an atmosphere of saturated steam (under elevated pressure). Conversion of calcium sulfate dihydrate to α-calcium sulfate hemihydrate can also be realized at lower temperatures and pressures not exceeding the atmospheric pressure in certain salt or acid solutions. These salt or acid solutions are characterized in that they either increase the boiling point of the solution or decrease the transition temperature considerably (ref.: "Crystallization as a separation process", ACS Symposium Series 438, 1990, E.T. White and S. Mukhopadhyay, p. 300. Fig.5). However, it is possible to form α-calcium sulfate hemihydrate directly out of solution. This is done by adding sulphuric acid to a solution containing a calcium salt as described in DE-C- 2,519,122. More in particular DE-C- 2,519,122 relates to a process for the preparation of α-calcium sulfate hemihydrate by converting a calcium compound with a sulfate or bisulfate ions containing compound in an aqueous medium at a temperature exceeding the calcium sulfate hemihydrate/calcium sulfate dihydrate transition temperature, which process is characterized in that the calcium compound is calcium chloride. As appears from the description of said DE-C the chloride ions have a great impact on the hemihydrate/dihydrate transition temperature, i.e. decrease said transition temperature from about 97°C to about 70°C. Nevertheless it is preferred to carry out the process at a temperature of at least 20°C above the hemihydrate/dihydrate transition temperature for achieving a reasonable conversion rate; see the example: reaction temperature is 70°C + 20°C = 90°C. On account of the reaction temperature of 90°C the reaction may be carried out under atmospheric pressure, which is preferred from a technological point of view.

From prior art it is known that in the fermentative production of for instance lactic acid and other organic acids, the pH is maintained at a desired level by adding lime or chalk. For recovering the lactic acid from the calcium lactate product sulfuric acid is added to the calcium lactate obtained, resulting in lactic acid and gypsum. In this way annually a large amount of gypsum is produced as a byproduct. This gypsum is contaminated with lactic acid and contains rather large amounts of water (up to 40 wt.%; free water and crystal water). Up to now the gypsum was either dumped at sea or delivered at gypsum companies free of charge. This situation is rather unsatisfying in either environmental or in economical point of view. Therefore Applicant has done research to either improve the quality of gypsum or, by means of changing process parameters, produce another chemical compound as a byproduct with a higher market value than the gypsum produced today.

Surprisingly it has been found that α-calcium sulfate hemihydrate can be prepared in a high yield from organic calcium salts like calciumlactate and a sulfate compound like sulfuric acid in an aqueous solution or suspension at a temperature which is above the hemihydrate/dihydrate transition temperature (for the calcium lactate system: 96,5 ± 0.3°C) and below the boiling point of the solution or suspension i.e. the reaction may be carried out under atmospheric pressure.

Above indicated result of the process according to the invention was unexpected as according to the above discussed DE-C-2,519,122 the α-calcium sulfate hemihydrate production reaction should be carried out at a temperature of at least 20°C above the hemihydrate/dihydrate transition temperature, for achieving a reasonable conversion rate of for instance > 90%. However, despite the fact that the α-calcium sulfate hemihydrate/calcium sulfate dihydrate transition temperature in the calcium lactate/sulfuric acid system remains virtually unchanged (i.e. 96.5 ± 0,3°C instead of 97.2°C in pure water) conversion rates of over 98% (only limited due to the solubility of calcium sulfate under the specific conditions) are realized at a temperature below the boiling point of the reaction medium. Thus, production of α-calcium sulfate hemihydrate from an aqueous solution or suspension containing an organic calcium salt on an industrial scale under atmospheric pressure is possible. Preferably, the process is carried out at a temperature not exceeding one degree centigrade above the α-calcium sulfate hemihydrate/calcium sulfate dihydrate transition temperature. Furthermore, in specific embodiments it is preferred to apply a slightly elevated pressure of for instance 0.1-2 bar for preventing excessive boiling losses of the aqueous reaction medium.

With respect to the concentration of the organic calcium salt in the aqueous starting solution or suspension it is brought to the fore that in principle any concentration is applicable. However, from a technical point of view said concentration may preferably be varied within the range of 1 to 80% by weight based on the aqueous medium.

Concerning the sulfate compound to be used in the process according to the invention it is noted that all kinds of sulfate and bisulfate containing solutions in water, like sodium sulfate solution in water, are considered suitable. However, advantageously sulfuric acid is used as the sulfate compound. For this aim sulfuric acid solutions having a sulfuric acid content in the range of 30-98% by weight are applicable. However, also oleum is considered suitable as a source for the sulfate compound.

The amount of calcium salt in respect to the amount of sulfate compound may vary within wide limits, i.e. it is possible to apply an excess of one of the reagents. However, preferably the calcium salt and the sulfate compound are used in a substantially stoechiometric ratio.

The residence time of the reagents of the process according to the invention in the reactor, i.e. the reaction time, may also vary within wide limits but is preferably in the range of 15 to 120 minutes.

The α-calcium sulfate hemihydrate product may be recovered from the aqueous medium by means of any suitable way, preferably by filtration or centrifugation. Then the recovered product is advantageously subjected to a wash step with water and - if necessary - subsequently dried.

Furthermore, due to the fact that organic calcium compounds are used as starting material for the production of α-calcium sulfate hemihydrate much weaker acids are produced resulting in less corrosive process conditions; pH values ranging from 2-3 instead of 0-1.5.

Concerning the suitable organic calcium salts it is remarked that next to calcium lactate also calcium citrate, calcium gluconate and calcium acetate can be used. These salts are also intermediates which can be formed in fermentation processes for the production of the corresponding acid.

The α-calcium sulfate hemihydrate product obtained according to the process of the invention is substantially free of calcium sulfate dihydrate and calcium sulfate anhydrite (all analyses are performed by X-ray diffractometry). Due to a favourable crystal size distribution said product has excellent filterability and washability. The obtained crystals can also be dried relatively easy.

### Example 1

A solution containing 18 wt.% calcium lactate and sulfuric acid (96 wt.%) are continuously fed in a stoechiometric ratio to a double jacketed 10 liter glass reactor which is thermostatically controlled at a temperature of 98°C. The average residence time is 30 minutes. After starting up the process the pH acquires a steady value of 2.5. After another stay of (on average) 30 minutes in a buffertank (T = 98°C) a conversion rate of 98.5 % is established (the conversion rate is limited due to the solubility of calcium sulfate in this specific environment only.

After 18 residence times a crystal slurry is obtained containing α-calcium sulfate hemihydrate needle crystals with maximum lengths of up to 1000 »m. Also hexagonal columnar crystals with internal pores are found. After a wash step with water the α-calcium sulfate hemihydrate crystals obtained have a purity of more than 99.9%.

### Example 2

A 10 liter solution containing 18 wt.% calcium gluconate is acidified in 35 minutes by adding sulfuric acid (96 wt.%) at a temperature of 100.0°C. The addition of sulfuric acid is stopped when minimum conductivity of the slurry determined with a conductivity electrode device is reached. The final value of the pH is 2.3. During and at the end of the experiment crystal samples are taken for analysis: 99 % α-calcium sulfate hemihydrate, 1% calcium sulfate anhydrate, 0% calcium sulfate dihydrate. The conversion rate obtained was 96.3 %.

The calcium sulfate anhydrite has not been found if the process was realized as a continuous process with a residence time of for instance 30 minutes.

### Example 3

A 10 liter suspension containing 18 wt.% calcium citrate is acidified in 80 minutes by adding sulfuric acid (96 wt.%) at a temperature of 100.0°C. Immediately after the start of acidification the conductivity (see Example 2) increases up to the point where all of the remaining calcium citrate is in solution; then the conductivity starts to decrease. The addition of sulfuric acid is stopped when the second minimum (the first minimum being at the start of acidification) in conductivity is reached. The final value of the pH is 2.0. During and at the end of the experiment crystal samples are taken for analysis; at the end the composition is 90% α-calcium sulfate hemihydrate, 5% calcium sulfate anhydrite, 5% calcium sulfate dihydrate. The conversion rate obtained was 98.4 %.

### Example 4

A 10 liter solution containing 18 wt.% calcium acetate is acidified in 65 minutes by adding sulfuric acid (96 wt.%) at a temperature of 100.0°C. The addition of sulfuric acid is stopped when minimum conductivity (see Example 2) of the slurry is reached. The final value of the pH is 2.2. During and at the end of the experiment crystal samples are taken for analysis 99% α-calcium sulfate hemihydrate, 1% calcium sulfate anhydrite, 0% calcium sulfate dihydrate. The conversion rate obtained was 98.7 %.

The calcium sulfate anhydrite will not be found if the production is realized as a continuous process with a residence time of for instance 30 minutes.

## Claims

1. A process for preparing α-calcium sulfate hemihydrate by converting a calcium salt with a sulfate compound in an aqueous system at a temperature exceeding the α-calcium sulfate hemihydrate/calcium sulfate dihydrate transition temperature, characterized by using as a calcium salt either a solution or suspension of an organic calcium salt.

2. The process according to Claim 1, characterized by carrying out the process at a temperature less than one degree centigrade above the α-calcium sulfate hemihydrate/calcium sulfate dihydrate transition temperature.

3. The process according to Claim 1 or 2, characterized by carrying out the process at a pressure, not exceeding atmospheric pressure.

4. The process according to any one of the Claims 1-3, characterized by performing the process as a continuous process.

5. The process according to any one of the Claims 1-4, characterized by using either a suspension or solution of a calcium salt released at the fermentative production of the corresponding organic acid.

6. The process according to Claim 5, characterized by using calcium lactate formed during the fermentative production of lactic acid as the calcium salt.

7. The process according to Claim 5, characterized by using calcium citrate formed during the fermentative production of citric acid as the calcium salt.

8. The process according to Claim 5, characterized by using calcium gluconate formed during the fermentative production of gluconic acid as the calcium salt.

9. The process according to any one of the Claims 1-4, characterized by using calcium acetate as the calcium salt.

10. α-Calcium sulfate hemihydrate product obtained by means of the process according to any one of the claims 1-9.

11. Products, totally or partly derived from the α-calcium sulfate hemihydrate product, obtained by means of the process according to any one of the claims 1-9.

## Patentansprüche

1. Verfahren zur Herstellung von α-Calciumsulfat-Halbhydrat durch Umwandlung eines Calciumsalzes mit einer Sulfatverbindung in einem wäßrigen System bei einer Temperatur, die die α-Calciumsulfat-Halbhydrat/Calciumsulfat-Dihydratübergangstemperatur übersteigt,
dadurch gekennzeichnet,
daß als Calciumsalz entweder eine Lösung oder eine Suspension eines organischen Calciumsalzes verwendet wird.

2. Verfahren nach Anspruch 1,
dadurch gekennzeichnet,
daß das Verfahren bei einer Temperatur niedriger als 1°C über der α-Calciumsulfat-Halbhydrat/Calciumsulfat-Dihydratübergangstemperatur ausgeführt wird.

3. Verfahren nach einem der Ansprüche 1 oder 2,
dadurch gekennzeichnet,
daß das Verfahren bei einem Druck, der Atmosphärendruck nicht übersteigt, ausgeführt wird.

4. Verfahren nach einem der Ansprüche 1 bis 3,
dadurch gekennzeichnet,
daß das Verfahren als kontinuierliches Verfahren ausgeführt wird.

5. Verfahren nach einem der Ansprüche 1 bis 4,
dadurch gekennzeichnet,
daß entweder eine Suspension oder eine Lösung eines Calciumsalzes verwendet wird, das bei der fermentativen Herstellung der korrespondierenden organischen Säure freigesetzt wird.

6. Verfahren nach Anspruch 5,
dadurch gekennzeichnet,
daß Calciumlactat, das während der fermentativen Herstellung von Milchsäure gebildet wird, als das Calciumsalz verwendet wird.

7. Verfahren nach Anspruch 5,
dadurch gekennzeichnet,
daß Calciumcitrat, das während der fermentativen Herstellung von Zitronensäure gebildet wird, als das Calciumsalz verwendet wird.

8. Verfahren nach Anspruch 5,
dadurch gekennzeichnet,
daß Calciumgluconat, das während der fermentativen Herstellung von Gluconsäure gebildet wird, als das Calciumsalz verwendet wird.

9. Verfahren nach einem der Ansprüche 1 bis 4,
dadurch gekennzeichnet,
daß Calciumacetat als das Calciumsalz verwendet wird.

10. α-calciumsulfat-Halbhydratprodukt, das mittels des Verfahrens nach einem der Ansprüche 1 bis 9 erhalten wird.

11. Produkte, vollständig oder teilweise von dem α-Calciumsulfat-Halbhydratprodukt stammend, das mittels des Verfahrens nach einem der Ansprüche 1 bis 9 erhalten wird.

## Revendications

1. Procédé pour préparer du α-sulfate de calcium hémihydraté par conversion d'un sel de calcium avec un composé sulfate dans un système aqueux à une température dépassant la température de transition α-sulfate de calcium hémihydraté/sulfate de calcium dihydraté, caractérisé par l'utilisation, en tant que sel de calcium, d'une solution ou d'une suspension d'un sel de calcium organique.

2. Procédé selon la revendication 1, caractérisé par la mise en oeuvre du procédé à une température moins de un degré centigrade supérieure à la température de transition α-sulfate de calcium hémihydraté/sulfate de calcium dihydraté.

3. Procédé selon la revendication 1 ou 2, caractérisé par la mise en oeuvre du procédé à une pression ne dépassant pas la pression atmosphérique.

4. Procédé selon l'une quelconque des revendications 1 à 3, caractérisé par la mise en oeuvre du procédé en tant que procédé en continu.

5. Procédé selon l'une quelconque des revendications 1 à 4, caractérisé par l'utilisation d'une suspension ou solution d'un sel de calcium libéré durant la production par fermentation de l'acide organique correspondant.

6. Procédé selon la revendication 5, caractérisé par l'utilisation, en tant que sel de calcium, du lactate de calcium formé durant la production par fermentation de l'acide lactique.

7. Procédé selon la revendication 5, caractérisé par l'utilisation, en tant que sel de calcium, du citrate de calcium formé durant la production par fermentation de l'acide citrique.

8. Procédé selon la revendication 5, caractérisé par l'utilisation, en tant que sel de calcium, du gluconate de calcium formé durant la production par fermentation de l'acide gluconique.

9. Procédé selon l'une quelconque des revendications 1 à 4, caractérisé par l'utilisation d'acétate de calcium en tant que sel de calcium.

10. Produit α-Sulfate de calcium hémihydraté, obtenu au moyen du procédé selon l'une quelconque des revendications 1 à 9.

11. Produits, totalement ou partiellement dérivés du produit α-sulfate de calcium hémihydraté, obtenus au moyen du procédé selon l'une quelconque des revendications 1 à 9.
